# EUROPEAN PATENT APPLICATION

(11) **EP 4 674 598 A1**
(43) Date of publication of application: **07.01.2026**
(21) Application number: 24784621.5
(22) Date of filing: 21.02.2024
(51) Int. Cl.: B29C 55/16, B29C 55/20

(54) **LINK MECHANISM, LINK DEVICE, AND STRETCHING MACHINE**

(30) Priority: 05.04.2023 JP 2023061626
(71) Applicant: The Japan Steel Works, Ltd., Tokyo 141-0032 (JP)
(72) Inventor: KATO, Masaki, Tokyo 141-0032 (JP); NAKAJIMA, Ichiro, Tokyo 141-0032 (JP)
(74) Representative: Simmons & Simmons LLP (Munich)
(86) International application number: PCT/JP2024/006356
(87) International publication number: WO 2024/209819

(57) **Abstract**

A clip 21 provided in a link mechanism includes: a lever part 421 rotatably provided to a main body part 41; a gripper 422 which is rotatably provided at one end of the lever part 421, and is pressed against the surface on one side of a resin film to grip the resin film between the gripper and a portion of the main body part 41; and an orientation holding part 423 which holds the orientation of the gripper 422. The orientation holding part 423 is provided, across the lever part 421 and the gripper 422, on a film side where the link mechanism faces the resin film, and applies a force to the gripper 422 in a direction away from the surface on one side of the resin film.

## Description

### TECHNICAL FIELD

The present invention relates to a link mechanism, a link device, and a stretching machine.

### BACKGROUND ART

A stretching machine configured to stretch a thin film (for example, resin sheet or resin film) in a longitudinal direction and a transverse direction while conveying it has been known. Patent Document 1 discloses a simultaneous biaxial stretching machine in which longitudinal stretching and transverse stretching of a sheet-like material are performed. The simultaneous biaxial stretching machine disclosed in Patent Document 1 includes endless link devices. The endless link device is made up of rails and a plurality of equal-length link units moving along the rails, and each equal-length link unit includes a gripping device configured to grip a thin film. By opening and closing the gripping device with opening/closing means, the thin film is gripped by the gripping device or released from the gripping device.

### RELATED ART DOCUMENTS

### PATENT DOCUMENTS

Patent Document 1: Japanese Patent No. 4379306

### SUMMARY OF THE INVENTION

### PROBLEMS TO BE SOLVED BY THE INVENTION

In each gripping device, the posture of the gripper that holds the thin film is maintained. However, depending on the structure that maintains the posture, variations may occur in the force for maintaining the posture of the gripper of each gripping device due to deformation during installation or the like, which may adversely affect the quality of the thin film held by the gripper.

Other objects and novel features will be apparent from the description of this specification and the accompanying drawings.

### MEANS FOR SOLVING THE PROBLEMS

A link mechanism according to one embodiment includes a clip configured to hold a film. The clip includes a main body portion, a lever portion rotatably provided on the main body portion, a gripper rotatably provided at one end of the lever portion and configured to grip the film by being pressed against one surface of the film and sandwiching the film together with a part of the main body portion, and a posture maintaining portion configured to maintain a posture of the gripper. The posture maintaining portion is provided spanning the lever portion and the gripper on a film side where the link mechanism faces the film, and applies a force acting in a direction away from the one surface of the film to the gripper.

### EFFECTS OF THE INVENTION

According to one embodiment, variations in the force for maintaining the posture of each gripper can be suppressed.

### BRIEF DESCRIPTIONS OF THE DRAWINGS

[FIG. 1] FIG. 1 is a schematic view showing a thin-film manufacturing system according to the embodiment.
[FIG. 2] FIG. 2 is a plan view schematically showing a structure of a stretching machine according to the embodiment.
[FIG. 3] FIG. 3 is another plan view schematically showing the structure of the stretching machine according to the embodiment.
[FIG. 4A] FIG. 4A is a plan view schematically showing link mechanisms and rails according to the embodiment.
[FIG. 4B] FIG. 4B is another plan view schematically showing the link mechanisms and the rails according to the embodiment.
[FIG. 5] FIG. 5 is a plan view showing one of the plurality of link mechanisms according to the embodiment in an enlarged manner.
[FIG. 6A] FIG. 6A is a cross-sectional view of a gripping portion according to the embodiment taken along a line A-A shown in FIG. 5.
[FIG. 6B] FIG. 6B is a cross-sectional view of a clip according to the embodiment taken along a line B-B shown in FIG. 5.
[FIG. 7A] FIG. 7A is a cross-sectional view of the clip according to the embodiment taken along the line B-B shown in FIG. 5.
[FIG. 7B] FIG. 7B is a cross-sectional view of the clip according to the embodiment taken along the line B-B shown in FIG. 5.
[FIG. 8A] FIG. 8A is a cross-sectional view of a clip according to the first comparative example.
[FIG. 8B] FIG. 8B is a cross-sectional view of a clip according to the second comparative example.

### DETAILED DESCRIPTION OF PREFERRED EMBODIMENTS

Hereinafter, an embodiment will be described in detail with reference to the drawings. Note that the members having the same or substantially same function are denoted by the same reference characters throughout the drawings for describing the embodiment, and the repetitive description thereof will be omitted.

### <Configuration of Manufacturing System>

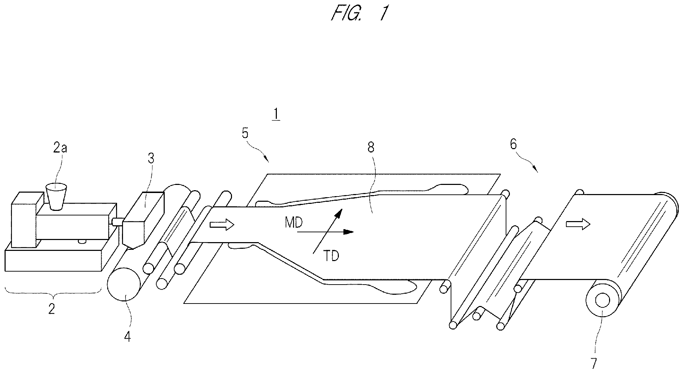

FIG. 1 is a schematic view showing a thin-film manufacturing system including a stretching machine according to the embodiment. A thin-film manufacturing system 1 shown in FIG. 1 includes an extrusion apparatus (extruder, kneading extruder) 2, a T-die 3, a raw sheet cooling apparatus 4, a stretching machine 5, a take-off apparatus 6, and a winder apparatus 7.

In the thin-film manufacturing system 1, a film, specifically, a resin film is manufactured through the following process. First, a raw material is supplied to the extrusion apparatus 2. More specifically, a resin material (for example, thermoplastic resin material in pellet shape) is supplied to a material supply unit (material supply port, hopper) 2a of the extrusion apparatus 2.

The raw material supplied to the extrusion apparatus 2 is conveyed while being kneaded (mixed). More specifically, the raw material supplied to the extrusion apparatus 2 is melted and kneaded while being sent forward (direction toward the T-die 3) by the rotation of screws in the extrusion apparatus 2.

The raw material kneaded by the extrusion apparatus 2 (kneaded material) is fed to the T-die 3. The kneaded material fed to the T-die 3 passes through the T-die 3 and is extruded toward the raw sheet cooling apparatus 4 through a slit of the T-die 3. The kneaded material is formed into a desired shape (in this case, film-like shape) by passing through the T-die 3.

The kneaded material is continuously extruded from the T-die 3 toward the raw sheet cooling apparatus 4. The kneaded material extruded from the T-die 3 is cooled in the raw sheet cooling apparatus 4 to be a resin film 8. Then, the resin film 8 is supplied to the stretching machine 5.

The resin film 8 supplied to the stretching machine 5 is stretched in an MD direction and a TD direction by the stretching machine 5. The resin film 8 subjected to a stretching process (stretching treatment) by the stretching machine 5 is conveyed to the winder apparatus 7 via the take-off apparatus 6 and is wound by the winder apparatus 7. The resin film 8 wound by the winder apparatus 7 is cut as needed.

The thin-film manufacturing system 1 shown in FIG. 1 manufactures the thin film through the process described above. Understandably, the thin-film manufacturing system 1 can be modified in various ways in accordance with the properties and the like of the thin film to be manufactured. For example, an extraction tank may be installed near the take-off apparatus 6 shown in FIG. 1, and a plasticizer (for example, paraffin) contained in the resin film 8 may be removed in some cases.

The stretching machine 5 constituting the thin-film manufacturing system 1 stretches the resin film 8 in the MD direction and the TD direction while conveying the resin film 8 in the MD direction. In other words, the MD (Machine Direction) direction is a conveying direction of the resin film 8. Also, the TD (Transverse Direction) direction is a direction that intersects the conveying direction of the resin film 8. Thus, in the following description, the MD direction is referred to as a "conveying direction" or a "longitudinal direction", and the TD direction is referred to as a "transverse direction" in some cases. The MD direction (conveying direction, longitudinal direction) and the TD direction (transverse direction) are the directions intersecting each other, and are more specifically the directions orthogonal to each other. Namely, the stretching machine 5 shown in FIG. 1 is a stretching machine capable of simultaneously stretching the resin film 8 in two directions intersecting each other while conveying the resin film 8, and is referred to as a "simultaneous biaxial stretching machine" in general.

### <Stretching Machine>

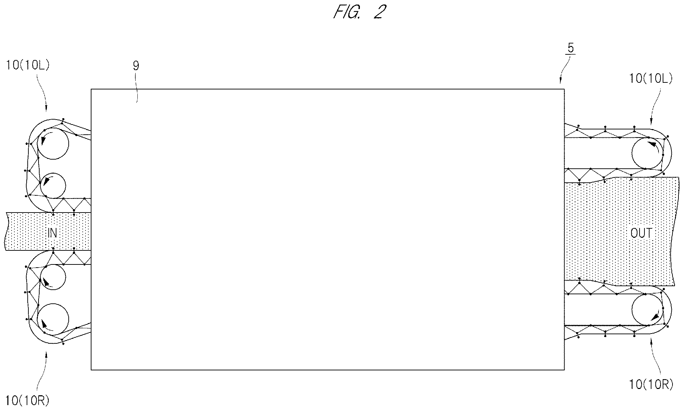

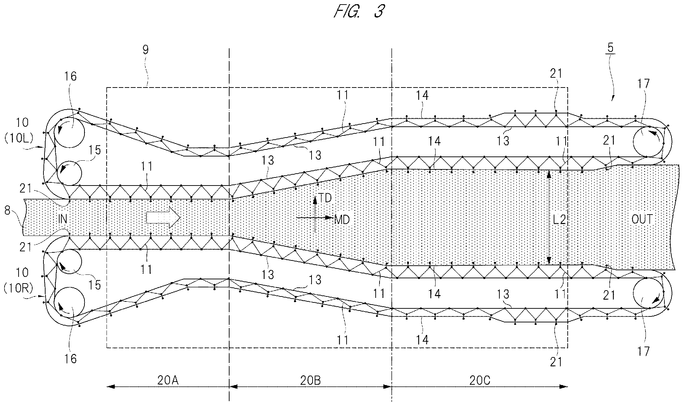

FIG. 2 and FIG. 3 are plan views schematically showing the structure of the stretching machine 5 according to the embodiment. The stretching machine 5 has a pair of link devices 10. The pair of link devices 10 are spaced apart from each other in plan view. In the following description, one of the pair of link devices 10 is referred to as a "link device 10R", and the other of the pair of link devices 10 is referred to as a "link device 10L" in some cases.

In FIG. 2 and FIG. 3, the link device 10R is disposed on a right side (R side) with respect to the conveying direction (MD direction), and the link device 10L is disposed on a left side (L side) with respect to the conveying direction (MD direction). The link device 10R and the link device 10L are spaced apart from each other in the TD direction and face each other in the TD direction with the resin film 8 interposed therebetween. The resin film 8 is conveyed in the MD direction in the space between the link device 10R and the link device 10L. In other words, the space between the link device 10R and the link device 10L facing each other functions as a conveyance path for conveying the resin film 8.

Referring to FIG. 3, the stretching machine 5 is divided into three regions 20A, 20B, and 20C along the conveying direction (MD direction). The region 20A serves as a preheating region, the region 20B serves as a stretching region, and the region 20C serves as a heat setting region. The regions 20A, 20B, and 20C are arranged in this order in the conveying direction (MD direction).

The inlet of the resin film 8 in the stretching machine 5 (portion indicated by "IN" in FIG. 2 and FIG. 3) is present in the region 20A. Also, the outlet of the resin film 8 in the stretching machine 5 (portion indicated by "OUT" in FIG. 2 and FIG. 3) is present in the region 20C. Further, the region 20B in which the stretching process is performed is disposed between the region 20A in which the inlet of the resin film 8 is present and the region 20C in which the outlet of the resin film 8 is present.

A heat treatment unit 9 covers a part of the region 20A, all of the region 20B, and a part of the region 20C. Also, the heat treatment unit 9 covers the central parts of the link devices 10R and 10L, and heats the resin film 8 conveyed by the link devices 10R and 10L. The heat treatment unit 9 in this embodiment is composed of an oven capable of heating the resin film 8 to a desired temperature. The resin film 8 passes through the inside of the oven as the heat treatment unit 9 while being held by the link devices 10R and 10L.

### <Link Device>

Each of the link devices 10R and 10L includes a plurality of link mechanisms 11 coupled to constitute an endless chain. Each of the link mechanisms 11 has a clip 21 which is a jig for gripping the resin film 8. The resin film 8 is held by the clips 21 in the link mechanisms 11 constituting the link device 10R and the clips 21 in the link mechanisms 11 constituting the link device 10L. Namely, one side (R side/right side) of the resin film 8 is gripped by the plurality of clips 21 in the link device 10R, and the other side (L side/left side) of the resin film 8 is gripped by the plurality of clips 21 in the link device 10L.

The link mechanisms 11 in the link devices 10R and 10L run on rails 13 and 14 which are a pair of rails for a stretching machine disposed on a support table (bed). The rail 14 is disposed on an outer side of the rail 13 and surrounds the rail 13. From another viewpoint, the rail 13 is disposed on an inner side of the rail 14 and is surrounded by the rail 14.

The rails 13 and 14 are annularly disposed over the regions 20A, 20B, and 20C. More specifically, the rails 13 and 14 are annularly disposed over the regions 20A, 20B, and 20C so as to be turned back in the region 20A where the inlet of the resin film 8 is present and turned back in the region 20C where the outlet of the resin film 8 is present.

The link device 10R has three sprockets 15, 16, and 17 disposed on an inner side of the rail 13. Similarly, the link device 10L has three sprockets 15, 16, and 17 disposed on an inner side of the rail 13. The sprockets 15 and 16 of each of the link devices 10R and 10L are disposed in the region 20A, and the sprocket 17 of each of the link devices 10R and 10L is disposed in the region 20C. Understandably, the sprockets 15 and 16 are disposed outside the heat treatment unit 9 that covers a part of the region 20A. Further, the sprockets 17 are disposed outside the heat treatment unit 9 that covers a part of the region 20C. Namely, the sprockets 15, 16, and 17 of each of the link devices 10R and 10L are disposed outside the oven as the heat treatment unit 9.

The plurality of link mechanisms 11 in the link devices 10R and 10L are disposed on the rails 13 and 14 in a state of being movable along the rails 13 and 14. The sprockets 15, 16, and 17 of the link device 10R mesh with the plurality of link mechanisms 11 of the link device 10R. Therefore, when the sprockets 15, 16, and 17 rotate, a driving force acts on the plurality of link mechanisms 11 of the link device 10R, and the link mechanisms 11 move (run) along the rails 13 and 14.

The sprockets 15, 16, and 17 of the link device 10L mesh with the plurality of link mechanisms 11 of the link device 10L. Therefore, when the sprockets 15, 16, and 17 rotate, a driving force acts on the plurality of link mechanisms 11 of the link device 10L, and the link mechanisms 11 move (run) along the rails 13 and 14. Namely, the rails 13 and 14 are guide rails for moving (running) the plurality of link mechanisms 11 in a predetermined direction.

In the following description, for each of the link devices 10R and 10L shown in FIG. 3, the side facing the resin film 8 is referred to as a "film side", and the side opposite to the film side is referred to as a "return side" in some cases. Namely, the side on which the plurality of link mechanisms 11 move from the inlet (IN) toward the outlet (OUT) while the clips 21 are gripping the resin film 8 is the film side. Also, the side which is located on the opposite side of the film side and on which the plurality of link mechanisms 11 move from the outlet (OUT) toward the inlet (IN) while the clips 21 do not grip the resin film 8 is the return side.

An interval between adjacent link mechanisms 11 (referred to also as "link pitch" in some cases) of the plurality of link mechanisms 11 changes in accordance with an interval (separation distance) between the rail 13 and the rail 14. In other words, the interval between the adjacent link mechanisms 11 can be adjusted by adjusting the separation distance between the rail 13 and the rail 14.

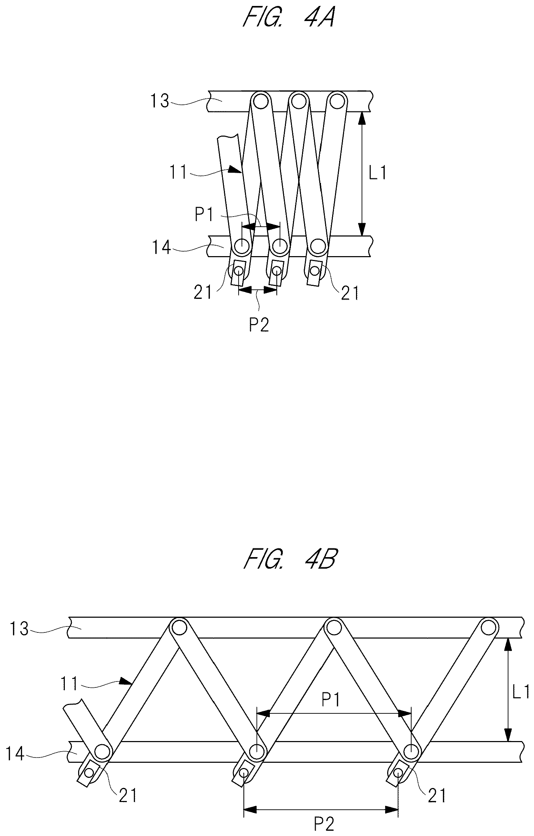

FIG. 4A and FIG. 4B are plan views schematically showing the link mechanisms 11 and the rails 13 and 14 according to the embodiment shown in FIG. 3. As shown in FIG. 4A and FIG. 4B, the angle formed by the adjacent link mechanisms 11 becomes larger and the pitch P1 between the adjacent link mechanisms 11 becomes larger as the separation distance L1 between the rails 13 and 14 becomes smaller. On the other hand, the angle formed by the adjacent link mechanisms 11 becomes smaller and the pitch P1 between the adjacent link mechanisms 11 becomes smaller as the separation distance L1 between the rails 13 and 14 becomes larger.

As described above, each link mechanism 11 has the clip 21 configured to grip the resin film 8. Therefore, the pitch P2 between the adjacent clips 21 also increases and decreases in accordance with the increase and decrease of the pitch P1 between the adjacent link mechanisms 11. Specifically, the pitch P1 between the link mechanisms 11 increases when the separation distance L1 between the rails 13 and 14 decreases. The pitch P2 between the clips 21 also increases when the pitch P1 between the link mechanisms 11 increases. In other words, the state transitions from the state shown in FIG. 4A to the state shown in FIG. 4B. On the other hand, the pitch P1 between the link mechanisms 11 decreases when the separation distance L1 between the rails 13 and 14 increases. The pitch P2 between the clips 21 also decreases when the pitch P1 between the link mechanisms 11 decreases. In other words, the state transitions from the state shown in FIG. 4B to the state shown in FIG. 4A.

Since each of the plurality of link mechanisms 11 includes the clip 21, the pitch P1 between the two adjacent link mechanisms 11 and the pitch P2 between the two clips 21 provided in these link mechanisms 11 are the same. Namely, P1=P2 holds in each of FIG. 4A and FIG. 4B.

### <Operation of Stretching Machine (Simultaneous Biaxial Stretching Machine)>

The resin film 8 supplied from the raw sheet cooling apparatus 4 to the stretching machine 5 is held by the link devices 10R and 10L at the inlet of the stretching machine 5. Specifically, the resin film 8 is gripped by the clips 21 in the link mechanisms 11 of the link devices 10R and 10L shown in FIG. 2 and FIG. 3. More specifically, one side of the resin film 8 in the width direction is gripped by the clips 21 in the link mechanisms 11 of the link device 10R, and the other side of the resin film 8 in the width direction is gripped by the clips 21 in the link mechanisms 11 of the link device 10L.

The resin film 8 whose both sides in the width direction are gripped by the clips 21 is conveyed from the inlet to the outlet of the stretching machine 5 along with the movement of the link mechanisms 11 including the clips 21, and passes through the region 20A (preheating region), the region 20B (stretching region), and the region 20C (heat setting region) in this order. The resin film 8 is stretched in the MD direction and the TD direction while passing through the region 20B (stretching region). Thereafter, the resin film 8 reaches the outlet through the region 20C (heat setting region) and is released from the clips 21. The resin film 8 released from the clips 21 is conveyed to the take-off apparatus 6 and is further conveyed from the take-off apparatus 6 to the winder apparatus 7.

As shown in FIG. 3, in the region 20A (preheating region), the interval (separation distance in the TD direction) L2 between the rails 13 and 14 of the link device 10R and the rails 13 and 14 of the link device 10L is almost constant. Therefore, the stretching process of the resin film 8 in the TD direction is not performed in the region 20A. Accordingly, the width (dimension in the TD direction) of the conveyed resin film 8 does not change and remains constant in the region 20A.

Also, in the region 20A, the interval (separation distance) L1 between the rail 13 and the rail 14 of the link device 10R on the film side is almost constant. Therefore, in the region 20A, the pitch P1 of the link mechanisms 11 of the link device 10R on the film side is almost constant, and thus the pitch P2 of the clips 21 of the link device 10R on the film side is also almost constant. Further, in the region 20A, the interval (separation distance) L1 between the rail 13 and the rail 14 of the link device 10L on the film side is almost constant. Therefore, in the region 20A, the pitch P1 of the link mechanisms 11 of the link device 10L on the film side is almost constant, and thus the pitch P2 of the clips 21 of the link device 10L on the film side is also almost constant. As a result, the stretching process of the resin film 8 in the MD direction is not performed in the region 20A. Namely, the stretching process of the resin film 8 in the TD direction and the MD direction is not performed in the region 20A.

Next, the operation of the stretching machine 5 in the region 20B will be described. In the region 20B, the interval (separation distance in the TD direction) between the rails 13 and 14 of the link device 10R and the rails 13 and 14 of the link device 10L gradually increases as advancing in the conveying direction (MD direction). Therefore, in the region 20B, the resin film 8 is pulled and stretched in the TD direction as it advances in the conveying direction (MD direction). In other words, in the region 20B, the width (dimension in the TD direction) of the resin film 8 gradually increases as it advances in the conveying direction (MD direction).

Also, in the region 20B, as advancing in the conveying direction (MD direction), the interval (separation distance) L1 between the rail 13 and the rail 14 of the link device 10R on the film side gradually decreases. Further, in the region 20B, as advancing in the conveying direction (MD direction), the interval (separation distance) L1 between the rail 13 and the rail 14 of the link device 10L on the film side also gradually decreases. Therefore, in the region 20B, the pitch P1 of the link mechanisms 11 of the link device 10R on the film side gradually increases as advancing in the conveying direction (MD direction), and thus the pitch P2 of the clips 21 of the link device 10R on the film side also gradually increases. Further, in the region 20B, the pitch P1 of the link mechanisms 11 of the link device 10L on the film side gradually increases as advancing in the conveying direction (MD direction), and thus the pitch P2 of the clips 21 of the link device 10L on the film side also gradually increases. As a result, in the region 20B, the resin film 8 is pulled and stretched in the MD direction as it advances in the conveying direction (MD direction).

Accordingly, in the region 20B, the resin film 8 is stretched (drawn) in the TD direction and the MD direction as it advances in the conveying direction (MD direction). In other words, in the region 20B, the stretching process in the TD direction and the MD direction is applied to the resin film 8.

Next, the operation of the stretching machine 5 in the region 20C will be described. In the region 20C, the interval (separation distance) L1 between the rail 13 and the rail 14 of the link device 10R on the film side is almost constant. Therefore, in the region 20C, the pitch P1 of the link mechanisms 11 of the link device 10R on the film side is almost constant, and thus the pitch P2 of the clips 21 of the link device 10R on the film side is also almost constant. Further, in the region 20C, the interval (separation distance) L1 between the rail 13 and the rail 14 of the link device 10L on the film side is almost constant. Therefore, in the region 20C, the pitch P1 of the link mechanisms 11 of the link device 10L on the film side is almost constant, and thus the pitch P2 of the clips 21 of the link device 10L on the film side is also almost constant. As a result, the stretching process of the resin film 8 in the MD direction is not performed in the region 20C.

As described above, in the region 20A, the pitch P1 of the link mechanisms 11 of the link device 10R on the film side is kept constant, and the pitch P1 of the link mechanisms 11 of the link device 10L on the film side is also kept constant. Thereafter, in the region 20B, the pitch P1 of the link mechanisms 11 of the link device 10R on the film side and the pitch P1 of the link mechanisms 11 of the link device 10L on the film side are gradually expanded. Then, in the region 20C, the pitch P1 of the link mechanisms 11 of the link device 10R on the film side is kept constant again, and the pitch P1 of the link mechanisms 11 of the link device 10L on the film side is also kept constant again. Therefore, on the film side of each of the link devices 10R and 10L, the pitch P1 of the link mechanisms 11 in the region 20C is larger than the pitch P1 of the link mechanisms 11 in the region 20A. From another viewpoint, on the film side of each of the link devices 10R and 10L, the pitch P2 of the clips 21 in the region 20C is larger than the pitch P2 of the clips 21 in the region 20A. From still another viewpoint, on the film side of each of the link devices 10R and 10L, the separation distance L1 between the rails 13 and 14 in the region 20C is smaller than the separation distance L1 between the rails 13 and 14 in the region 20A.

### <Configuration of Link Mechanism>

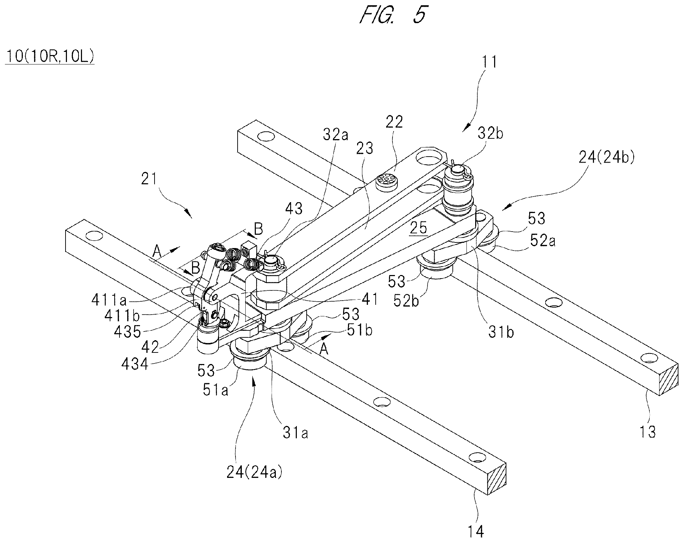

FIG. 5 is a perspective view showing one of the plurality of link mechanisms 11 according to the embodiment shown in FIG. 3 in an enlarged manner. Note that, in the following description, the side of the rails 13 and 14 as viewed from the link mechanism 11 is referred to as a lower side, and the side opposite to the rails 13 and 14 as viewed from the link mechanism 11 is referred to as an upper side in some cases.

As shown in FIG. 5, each of the link mechanisms 11 in the link devices 10R and 10L includes an upper link plate 22, a lower link plate 23, a pair of rail holders 24a and 24b, and a base member 25 extending across the pair of rail holders 24a and 24b in addition to the clip 21. One rail holder 24a is disposed on the rail 14, and the other rail holder 24b is disposed on the rail 13.

The upper link plate 22 and the lower link plate 23 are plate-shaped members that extend linearly in plan view. The base member 25 is common with the upper link plate 22 and the lower link plate 23 in that the base member 25 extends linearly in plan view, but the base member 25 is thicker than the upper link plate 22 and the lower link plate 23. In the following description, when there is no need to particularly distinguish between the rail holders 24a and 24b, they will be collectively referred to as "rail holders 24".

### <Rail Holder>

The rail holder 24a includes a roller holding portion 31a and a shaft 32a provided at the center of the roller holding portion 31a in the longitudinal direction. The roller holding portion 31a is disposed on the rail 14 so as to straddle the rail 14. Therefore, one end of the roller holding portion 31a disposed on the rail 14 in the longitudinal direction protrudes toward the inner side of the rail 14 (side facing the rail 13), and the other end of the roller holding portion 31a in the longitudinal direction protrudes toward the outer side of the rail 14 (opposite side of the side facing the rail 13). Also, when the roller holding portion 31a is disposed on the rail 14, the shaft 32a is located just above the rail 14.

The shaft 32a of the rail holder 24a penetrates one ends of the upper link plate 22, the lower link plate 23, and the base member 25 in the longitudinal direction. A base end of the base member 25, a base end of the upper link plate 22, and a base end of the lower link plate 23 are skewered with the shaft 32a, and are rotatably coupled with each other via the shaft 32a. In other words, the shaft 32a is a rotation axis on the base end side of the upper link plate 22, the lower link plate 23, and the base member 25.

The rail holder 24b includes a roller holding portion 31b and a shaft 32b provided at the center of the roller holding portion 31b in the longitudinal direction. The roller holding portion 31b is disposed on the rail 13 so as to straddle the rail 13. Therefore, one end of the roller holding portion 31b disposed on the rail 13 in the longitudinal direction protrudes toward the inner side of the rail 13 (side facing the rail 14), and the other end of the roller holding portion 31b in the longitudinal direction protrudes toward the outer side of the rail 13 (opposite side of the side facing the rail 14). Also, when the roller holding portion 31b is disposed on the rail 13, the shaft 32b is located just above the rail 13.

The shaft 32b of the rail holder 24b penetrates one end (tip end) of the base member 25 in the longitudinal direction and protrudes from the base member 25. Namely, the tip end of the base member 25 of the link mechanism 11 and tip ends of the upper link plate 22 and the lower link plate 23 of another adjacent link mechanism 11 are rotatably coupled with each other via the shaft 32b of the link mechanism 11. From another viewpoint, the shaft 32b is a rotation axis on the tip end side of the upper link plate 22, the lower link plate 23, and the base member 25.

### <Guide Roller>

A pair of guide rollers 51a and 51b facing each other with the rail 14 interposed therebetween are provided in a lower portion of the rail holder 24a, and a pair of guide rollers 52a and 52b facing each other with the rail 13 interposed therebetween are provided in a lower portion of the rail holder 24b. The guide rollers 51a, 51b, 52a, and 52b are made of metal. Each of the guide rollers 51a, 51b, 52a, and 52b has a cylindrical shape with openings at both ends in the axial direction, and a flange 53 protruding in a radially outward direction is integrally formed on one end side (upper portion) in the axial direction.

The flanges 53 of the guide rollers 51a and 51b provided in a lower portion of the rail holder 24a are disposed on the rail 14, and the flanges 53 of the guide rollers 52a and 52b provided in a lower portion of the rail holder 24b are disposed on the rail 13. More specifically, the flange 53 of the guide roller 51a overlaps the outer edge of the upper surface of the rail 14 (on the opposite side of the side facing the rail 13), and the flange 53 of the guide roller 51b overlaps the inner edge of the upper surface of the rail 14 (on the side facing the rail 13). Also, the flange 53 of the guide roller 52a overlaps the outer edge of the upper surface of the rail 13 (on the opposite side of the side facing the rail 14), and the flange 53 of the guide roller 52b overlaps the inner edge of the upper surface of the rail 13 (on the side facing the rail 14). Thus, the entire link mechanism 11 is supported by the rails 13 and 14 via the guide rollers 51a and 51b of the rail holder 24a and the guide rollers 52a and 52b of the rail holder 24b.

In other words, the guide rollers 51a, 51b, 52a, and 52b are support rollers that support the link mechanism 11. More specifically, the guide rollers 51a, 51b, 52a, and 52b are cantilever support rollers that support the link mechanism 11 by means of the flanges 53 provided on one end side (upper portion) in the axial direction. From another viewpoint, the guide rollers 51a, 51b, 52a, and 52b are flanged rollers having the integrally formed flanges 53.

When the rail holder 24 moves on the rail 14, the guide roller 51a moves along an outer side surface of the rail 14 while rotating. When the rail holder 24 moves on the rail 14, the guide roller 51b moves along an inner side surface of the rail 14 while rotating. Similarly, when the rail holder 24 moves on the rail 13, the guide roller 52a moves along an outer side surface of the rail 13 while rotating. When the rail holder 24 moves on the rail 13, the guide roller 52b moves along an inner side surface of the rail 13 while rotating.

### <Clip>

The clip 21 is provided at the base end of the base member 25. The clip 21 includes a main body portion 41, a gripping portion 42, a spring portion 43, and others. The main body portion 41 is fixed to the base end of the base member 25. The gripping portion 42 is attached to the main body portion 41 so as to be operable in an up-down direction. The spring portion 43 applies a force to the gripping portion 42 so as to operate the gripping portion 42 downward. By making the gripping portion 42 operate downward by the force received from the spring portion 43, the resin film 8 is sandwiched between the main body portion 41 and the gripping portion 42. Namely, the resin film 8 is gripped by the clip 21. On the other hand, by making the gripping portion 42 operate upward against the force received from the spring portion 43, the resin film 8 is released from the clip 21. Hereinafter, details of the gripping portion 42 will be described.

### <Gripping Portion>

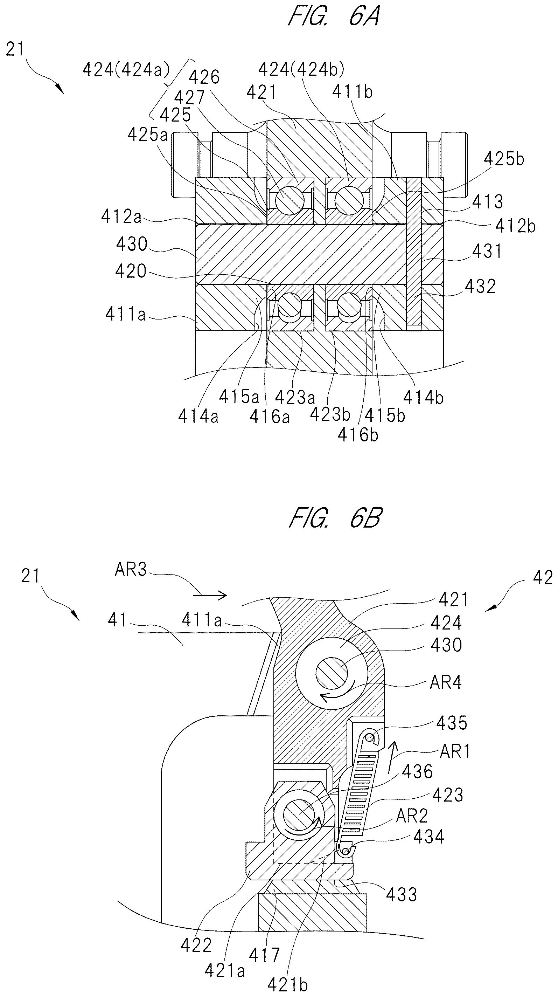

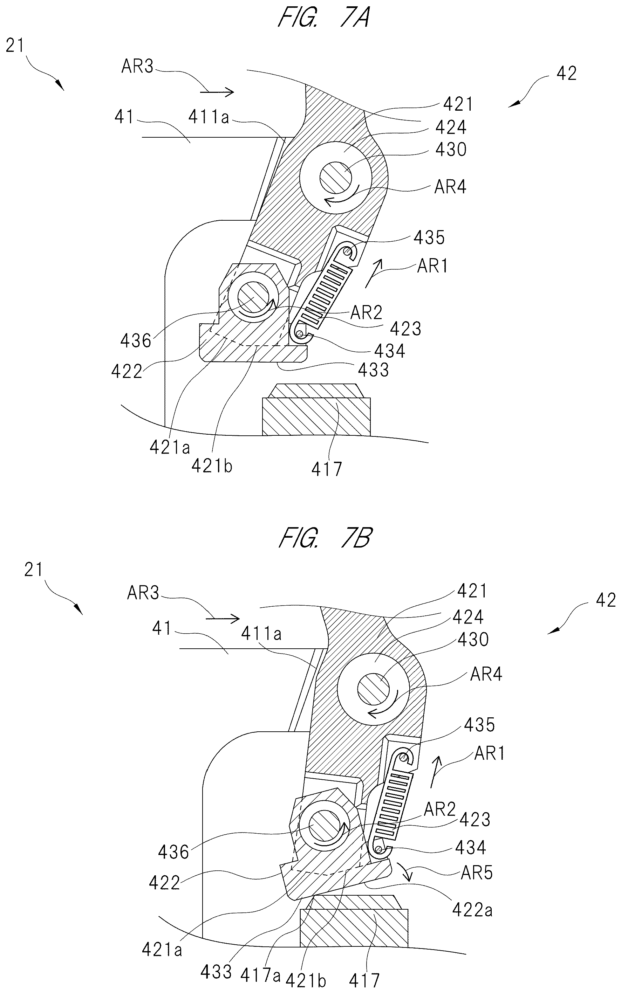

FIG. 6A is a cross-sectional view of the clip 21 according to the embodiment taken along a line A-A shown in FIG. 5. FIG. 6B, FIG. 7A, and FIG. 7B are cross-sectional views of the clip 21 according to the embodiment taken along a line B-B shown in FIG. 5. The gripping portion 42 has a lever portion 421, a gripper 422, a posture maintaining portion 423, and a bearing 424.

### <Lever Portion>

The lever portion 421 has a shape extending in the up-down direction. As shown in FIG. 5, the lever portion 421 is rotatably provided between arms 411a and 411b extending from the main body portion 41 toward the film side. Specifically, as shown in FIG. 6A, a shaft 430 is inserted into through holes 412a and 412b formed in the arms 411a and 411b and a through hole 420 formed in the lever portion 421. Consequently, the lever portion 421 is attached to the main body portion 41 so as to be rotatable around the shaft 430 as an axis. In the direction in which the shaft 430 extends, the length (width) of the lever portion 421 is smaller than the distance (interval) between the arm 411a and the arm 411b. Therefore, the lever portion 421 rotates without coming into contact with the arms 411a and 411b.

A lower end surface 421a and a lower end inclined surface 421b are formed at the lower end of the lever portion 421. As shown in FIG. 6B, the lower end surface 421a is a surface that becomes parallel to a lower gripping surface 417 provided on the main body portion 41 in a closed state described below. The lower end inclined surface 421b is formed on the film side of the lower end surface 421a, and as shown in FIG. 7A, is a surface that becomes parallel to the lower gripping surface 417 provided on the main body portion 41 in an open state described below.

The shaft 430 extends in a direction intersecting the direction in which the lever portion 421 extends, more specifically, in a direction perpendicular to the extending direction. Near one end of the shaft 430, a through hole 431 is formed in a direction intersecting the direction in which the shaft 430 extends, more specifically, along the up-down direction. Furthermore, a through hole 413 extending in the up-down direction is formed in the arm 411b. The shaft 430 is fixed to the arm 411b by inserting a fixing pin 432 extending in the up-down direction into the through hole 431 formed in the shaft 430 and the through hole 413 formed in the arm 411b.

The bearing 424 is interposed between the shaft 430 and the lever portion 421. That is, the lever portion 421 is rotatably supported by the bearing 424 with respect to the shaft 430 and the main body portion 41 having the arms 411a and 411b. Specifically, a bearing 424a and a bearing 424b are provided along the direction in which the shaft 430 extends. The bearing 424a is housed in a housing portion 423a formed around the through hole 420 of the lever portion 421. The housing portion 423a is a recessed portion formed on the surface of the lever portion 421 facing the arm 411a. Also, the bearing 424b is housed in a housing portion 423b formed around the through hole 420 of the lever portion 421. The housing portion 423b is a recessed portion formed on the surface of the lever portion 421 facing the arm 411b.

### <Bearing>

Each of the bearings 424a and 424b is a rolling bearing (ball bearing) having an inner ring 425, an outer ring 426 surrounding the inner ring 425, and a plurality of rolling elements (balls) 427 arranged between the inner ring 425 and the outer ring 426. A lubricant such as grease is sealed in the gap between the inner ring 425 and the outer ring 426.

The inner ring 425 of the bearing 424a has a surface 425a that intersects the direction in which the shaft 430 extends. This surface 425a comes into contact with a part of a surface 414a of the arm 411a that faces the lever portion 421. Specifically, a protrusion 415a that protrudes toward the lever portion 421 along an outer periphery of the through hole 412a is formed on the surface 414a.

The protrusion 415a has a surface 416a that intersects the direction in which the shaft 430 extends. This surface 416a comes into contact with the surface 425a of the inner ring 425. Consequently, the inner ring 425 of the bearing 424a is fixed by the arm 411a. However, the protrusion 415a is formed such that the surface 416a does not come into contact with the outer ring 426 of the bearing 424a. In other words, the arm 411a and the outer ring 426 are not in contact with each other.

Similarly, the inner ring 425 of the bearing 424b has a surface 425b that intersects the direction in which the shaft 430 extends. This surface 425b comes into contact with a part of a surface 414b of the arm 411b that faces the lever portion 421. Specifically, a protrusion 415b that protrudes toward the lever portion 421 along an outer periphery of the through hole 412b is formed on the surface 414b.

The protrusion 415b has a surface 416b that intersects the direction in which the shaft 430 extends. This surface 416b comes into contact with the surface 425b of the inner ring 425 of the bearing 424b. Consequently, the inner ring 425 of the bearing 424b is fixed by the arm 411b. However, the protrusion 415b is formed such that the surface 416b does not come into contact with the outer ring 426 of the bearing 424b. In other words, the arm 411b and the outer ring 426 are not in contact with each other.

With the above-mentioned configuration, the inner ring 425 of the bearing 424 is held by the arms 411a and 411b in the direction in which the shaft 430 extends. Also, an outer side surface of the shaft 430 is in contact with an inner side surface of the inner ring 425 of the bearing 424. Further, the outer ring 426 of the bearing 424 is not in contact with the arms 411a and 411b. Therefore, the inner ring 425 is fixed by the shaft 430 and the arms 411a and 411b, and the outer ring 426 and the lever portion 421 can rotate around the shaft 430.

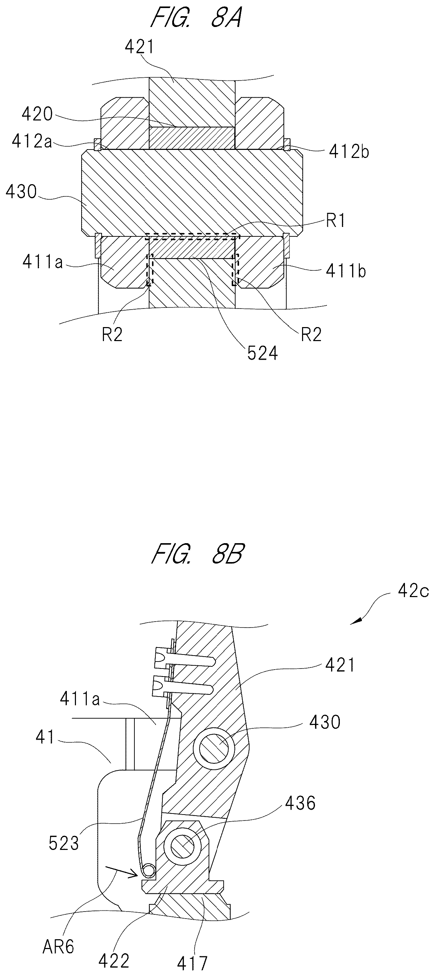

FIG. 8A is a cross-sectional view schematically showing a lever portion 421 and a shaft 430 of the first comparative example. Note that the first comparative example is a configuration previously studied by the inventors of this application in order to facilitate understanding of the embodiment. In the first comparative example, a bush 524 is provided in place of the bearing 424 in the space between the through hole 420 formed in the lever portion 421 and the shaft 430. When the lever portion 421 rotates, the inner side surface of the bush 524 slides against the outer side surface of the shaft 430. For this reason, it is necessary to supply a lubricant such as grease to a region R1, which is the sliding surface between the bush 524 and the shaft 430. However, when the lever portion 421 rotates, the grease supplied to the region R1 may scatter and cause problems such as adhesion to the resin film 8.

In addition, in the first comparative example, the lever portion 421 is in contact with the arms 411a and 411b. Therefore, when the lever portion 421 rotates, a region R2 which is a contact surface between the lever portion 421 and the arms 411a and 411b may wear out and generate wear powder.

In contrast, in this embodiment, the lever portion 421 and the outer ring 426 rotate without sliding against the arms 411a and 411b, suppressing wear and the generation of wear powder due to sliding. Also, in this embodiment, a lubricant such as grease is enclosed between the inner ring 425 and the outer ring 426. Therefore, it is possible to suppress the problem of the adhesion of the lubricant to the resin film 8 or the like, which occurs when the link mechanism 11 with the anti-wear lubricant adhering to the lever portion 421 meshes with the sprockets 15, 16, and 17 and the lubricant adhering to the lever portion 421 scatters due to the vibrations generated at this time.

### <Gripper>

Next, the gripper 422 of this embodiment will be described. As shown in FIG. 6B, FIG. 7A, and FIG. 7B, the gripper 422 is attached near the lower end of the lever portion 421, and moves together with the rotational movement of the lever portion 421 in the up-down direction. A shaft 436 extending along the direction in which the shaft 430 extends is provided near the lower end of the lever portion 421. The gripper 422 is supported by this shaft 436, and moves in the up-down direction in accordance with the movement of the lever portion 421. Also, the gripper 422 is attached to the lever portion 421 so as to be rotatable about the shaft 436 as an axis.

An upper gripping surface 433 is formed at the lower end of the gripper 422. The resin film 8 is sandwiched and gripped from above and below between the upper gripping surface 433 of the gripper 422 and the lower gripping surface 417 provided on the main body portion 41. The upper gripping surface 433 is a surface that is pressed from above against the upper surface which is one surface of the resin film 8, and the lower gripping surface 417 is a surface that comes into contact from below with the lower surface which is the other surface of the resin film 8. In other words, the gripper 422 grips the resin film 8 by sandwiching the resin film 8 together with the lower gripping surface 417 which is a part of the main body portion 41.

When the lever portion 421 rotates around the shaft 430, the gripper 422 moves in the up-down direction together with the lever portion 421 and rotates relative to the lever portion 421. Therefore, the position of the gripper 422 relative to the resin film 8 changes. When the relative position of the gripper 422 relative to the resin film 8 changes, the posture of the upper gripping surface 433 of the gripper 422 is maintained by the posture maintaining portion 423.

### <Posture Maintaining Portion>

The posture maintaining portion 423 is an elastic member such as a coil spring, and is provided spanning the lever portion 421 and the gripper 422. The posture maintaining portion 423 is provided on the film side where the link mechanism 11 faces the resin film 8. Specifically, one end of the posture maintaining portion 423 is attached to an attachment pin 434 provided on the gripper 422, and the other end of the posture maintaining portion 423 is attached to an attachment pin 435 provided on the lever portion 421.

The attachment pin 434 is provided at a position on the gripper 422 closer to the resin film 8 than the shaft 436 is. The attachment pin 435 is provided at a position on the lever portion 421 closer to the resin film 8 than the shaft 430 is. The attachment pins 434 and 435 are rod-shaped members extending along the direction in which the shafts 430 and 436 extend. By providing the posture maintaining portion 423, a force acting in a direction away from the resin film 8 is applied to the gripper 422 as indicated by the arrow AR1 in FIG. 6B, FIG. 7A, and FIG. 7B.

### <Operation of Clip>

The operation of the clip 21 having the above-mentioned configuration will be described with reference to FIG. 6B, FIG. 7A, and FIG. 7B. FIG. 6B is a cross-sectional view of the clip 21 when the clip 21 according to the embodiment grips the resin film 8. In the following description, the state of the clip 21 shown in FIG. 6B may be referred to as a closed state. FIG. 7A is a cross-sectional view of the clip 21 when the clip 21 according to the embodiment does not grip the resin film 8. In the following description, the state of the clip 21 shown in FIG. 7A may be referred to as an open state. FIG. 7B is a cross-sectional view of the clip 21 when it transitions from the open state to the closed state.

In the closed state shown in FIG. 6B, a downward force acts on the gripping portion 42 by the spring portion 43 (see FIG. 5). Therefore, the upper gripping surface 433 of the gripper 422 is located above the lower gripping surface 417, with the resin film 8 interposed therebetween. As described above, the force indicated by the arrow AR1 is applied to the gripper 422 by the posture maintaining portion 423 provided on the film side of the link mechanism 11. By the force applied by the posture maintaining portion 423, a counterclockwise force centered on the shaft 436 acts on the gripper 422 as indicated by an arrow AR2 in FIG. 6B.

However, the rotation of the upper gripping surface 433 of the gripper 422 along the arrow AR2 is restricted by the lower end surface 421a of the lever portion 421 and the lower gripping surface 417. Therefore, the posture of the gripper 422 is maintained with the upper gripping surface 433 and the lower gripping surface 417 facing each other, that is, with the upper gripping surface 433 facing downward.

As a result, the resin film 8 is sandwiched between the upper gripping surface 433 and the lower gripping surface 417, and is gripped from above and below by the upper gripping surface 433 and the lower gripping surface 417. The clip 21 is in the closed state described above when the link mechanism 11 passes through the regions 20A, 20B, and 20C from the inlet to the outlet of the stretching machine 5.

When an upper portion of lever portion 421 is pushed in the direction indicated by an arrow AR3, that is, toward the film side in the closed state shown in FIG. 6B, the clip 21 transitions to the open state shown in FIG. 7A. When transitioning to the open state, the lever portion 421 rotates around the shaft 430 as an axis. Specifically, the lever portion 421 rotates in the clockwise direction indicated by an arrow AR4 around the shaft 430 against the force applied by the spring portion 43. By this rotation of the lever portion 421, the lower end of the lever portion 421 and the gripper 422 provided at the lower end of the lever portion 421 move in the upward direction away from the film side.

At this time, by the force applied by the posture maintaining portion 423, the force in the counterclockwise direction indicated by the arrow AR2 centered on the shaft 436 is acting on the gripper 422. Since the gripper 422 has moved in the upward direction away from the film side along with the movement of the lever portion 421, the movement of the gripper 422 in the direction of the arrow AR2 is not restricted by the lower gripping surface 417. Therefore, the gripper 422 rotates counterclockwise along the arrow AR2 around the shaft 436. When the gripper 422 rotates counterclockwise, the relative positional relationship between the lower end of the lever portion 421 and the gripper 422 changes, and the upper surface of the upper gripping surface 433 comes into contact with the lower end inclined surface 421b of the lever portion 421. This restricts further counterclockwise rotation of the gripper 422.

As a result, the upper gripping surface 433 and the lower gripping surface 417 are spaced apart from each other, and the posture of the gripper 422 is maintained with the upper gripping surface 433 facing downward. Since the upper gripping surface 433 and the lower gripping surface 417 are spaced apart from each other, the resin film 8 gripped by the clip 21 is released, or the resin film 8 can be gripped by the clip 21. In other words, the clip 21 is in the open state described above when the link mechanism 11 is located at the inlet or outlet of the stretching machine 5.

When the clip 21 transitions from the open state to the closed state, the force acting on the upper portion of the lever portion 421 in the direction of the arrow AR3 is released. Then, the lever portion 421 rotates in the direction opposite to the arrow AR4 (counterclockwise) around the shaft 430 by the force applied by the spring portion 43. By the rotation of the lever portion 421, the gripper 422 moves in a direction approaching the lower gripping surface 417 below. At this time, the gripper 422 to which the force in the direction of the arrow AR1 is applied by the posture maintaining portion 423 moves in the direction approaching the lower gripping surface 417 with its rotation restricted by the lower end inclined surface 421b of the lever portion 421. In other words, the gripper 422 moves in conjunction with the movement of the lever portion 421 without moving relative to the lever portion 421.

Then, as shown in FIG. 7B, a part of the upper gripping surface 433 of the gripper 422 comes into contact with an end portion 417a of the lower gripping surface 417. At this time, a range 422a of the upper gripping surface 433 of the gripper 422 is separated upward from the lower gripping surface 417 and the resin film 8 on the lower gripping surface 417. Note that the range 422a is the range of the upper gripping surface 433 on the film side relative to the position where it is in contact with the end portion 417a of the lower gripping surface 417.

When the lever portion 421 further rotates in the direction opposite to the arrow AR4 from this state, the movement of the gripper 422 in conjunction with the lever portion 421 is restricted by the end portion 417a. Consequently, the gripper 422 moves relative to the lever portion 421, and the upper surface of the upper gripping surface 433 and the lower end surface 421a of the lever portion 421 come into contact with each other. Therefore, along with the movement of the lever portion 421, the upper gripping surface 433 receives a force from the lower end surface 421a of the lever portion 421. As a result, the range 422a of the upper gripping surface 433 moves from above the resin film 8 along an arrow AR5. Then, as the upper gripping surface 433 of the gripper 422 is located above the resin film 8, the clip 21 transitions to the closed state shown in FIG. 6B, and the resin film 8 is gripped.

Since the posture of the gripper 422 is maintained by the posture maintaining portion 423, it is possible to prevent the clip 21 from transitioning to the closed state after the upper gripping surface 433 moves while being in contact with the upper surface of the resin film 8. As a result, it is possible to grip the resin film 8 while suppressing tears or wrinkles in the resin film 8, which are caused when the upper gripping surface 433 moves while being in contact with the upper surface of the resin film 8.

FIG. 8B is an external view schematically showing a gripping portion 42c of the second comparative example. Note that the second comparative example is a configuration previously studied by the inventors of this application in order to facilitate understanding of the embodiment. The gripping portion 42c of the second comparative example has the lever portion 421, the gripper 422, and the bearing 424 of the embodiment described above. However, the gripping portion 42c has a leaf spring 523 instead of the posture maintaining portion 423 of the embodiment. The leaf spring 523 is provided on the surface of the link mechanism 11 on the side opposite to the film side. The leaf spring 523 is attached to the lever portion 421 by a bolt or the like near the one end (upper side) thereof. The other end (lower side) of the leaf spring 523 comes into contact with the gripper 422. In this way, the leaf spring 523 applies a force toward the film side indicated by an arrow AR6 to the gripper 422, thereby maintaining the posture of the gripper 422.

In the case of the second comparative example, there is a fear that the bending angle of the leaf spring 523 may be misaligned when the leaf spring 523 is attached to the lever portion 421. If the leaf spring 523 is attached with a misaligned bending angle, there is a possibility that variations will occur in the force applied by the leaf spring 523 to the gripper 422 provided on each of the plurality of link mechanisms 11.

Furthermore, since friction occurs at the location where the leaf spring 523 and the gripper 422 come into contact with each other during the transition between the open state and the closed state, a lubricant such as grease needs to be supplied. However, the problem of the adhesion of the grease to the resin film 8 or the like may occur when the supplied grease scatters due to the movement of the lever portion 421.

In contrast, in this embodiment, the ends of the posture maintaining portion 423 are attached to the attachment pin 434 provided on the lever portion 421 and to the attachment pin 435 provided on the gripper 422. Therefore, unlike the case where the leaf spring 523 is attached as in the second comparative example, problems such as misalignment of the bending angle can be suppressed when attaching the posture maintaining portion 423. As a result, the occurrence of variations in the force applied to the gripper 422 provided on each of the plurality of link mechanisms 11 can be suppressed. Therefore, the posture of the gripper 422 provided on each of the plurality of link mechanisms 11 is stably maintained.

In addition, since there is no location where friction occurs between the posture maintaining portion 423 and the gripper 422 when the lever portion 421 and the gripper 422 move, the need to supply a lubricant such as grease to the posture maintaining portion 423 is reduced. As a result, it is possible to suppress the occurrence the problem of the adhesion of the grease to the resin film 8 or the like caused when the supplied grease scatters due to the movement of the lever portion 421.

According to the embodiment described above, at least one of the following effects can be achieved:
(1) The clip 21 includes the posture maintaining portion 423 configured to maintain the posture of the gripper 422. The posture maintaining portion 423 is provided on the film side spanning the lever portion 421 and the gripper 422, and applies a force to the gripper 422 in a direction away from one side (upper surface side) of the resin film 8. Consequently, unlike the case where the leaf spring 523 is used as in the second comparative example, the occurrence of variations in the force applied from the posture maintaining portion 423 to the gripper 422 provided on each of the plurality of link mechanisms 11 can be suppressed. As a result, since the occurrence of variations in the force applied to the resin film 8 gripped by the plurality of grippers 422 can be suppressed, the quality of the manufactured resin film 8 can be maintained. In addition, there is no need to supply a lubricant such as grease unlike the case where the leaf spring 523 of the second comparative example is used. Therefore, it is possible to suppress the occurrence the problem of the adhesion of the grease to the resin film 8 or the like caused when the supplied grease scatters due to the movement of the lever portion 421.
(2) The posture maintaining portion 423 is an elastic member, one end of which is attached to the attachment pin 435 provided on the lever portion 421, and the other end of which is attached to the attachment pin 434 provided on the gripper 422. Therefore, since the posture maintaining portion 423 can be easily attached to the lever portion 421 and the gripper 422, unlike the case where the leaf spring 523 is attached as in the second comparative example, problems such as deformation of the posture maintaining portion 423 can be suppressed. As a result, the occurrence of variations in the force acting on each gripper 422 along the arrow AR1 can be suppressed.
(3) The bearing 424 interposed between the shaft 430 and the lever portion 421 and configured to rotatably support the lever portion 421 is provided. Therefore, unlike the case where the bush 524 of the first comparative example is provided, the lever portion 421 rotates without sliding against the arms 411a and 411b, suppressing wear and the generation of wear powder due to sliding. Also, a lubricant such as grease is enclosed inside the bearing 424. Therefore, unlike the case where grease or the like is supplied to the sliding surface as in the first comparative example, it is possible to suppress the problem of the adhesion of the lubricant to the resin film 8 or the like, which occurs when the link mechanism 11 meshes with the sprockets 15, 16, and 17 and the lubricant adhering to the lever portion 421 scatters due to the vibrations generated at this time.
(4) The surfaces 425a and 425b of the inner ring 425 of the bearing 424 that intersect the direction in which the shaft 430 extends come into contact with the arms 411a and 411b of the main body portion 41. Therefore, it is possible to prevent the lever portion 421 from moving along the direction in which the shaft 430 extends when the lever portion 421 rotates, and the generation of wear powder due to wear between the lever portion 421 and the arms 411a and 411b can be suppressed.

In the foregoing, the invention made by the inventors of this application has been specifically described based on the embodiment. However, it is needless to say that the present invention is not limited to the embodiment or example described above and various modifications can be made within the range not departing from the gist of the present invention.

### REFERENCE SIGNS LIST

5 stretching machine
8 resin film
10, 10R, 10L link device
11 link mechanism
13, 14 rail
21 clip
25 base member
41 main body portion
421 lever portion
422 gripper
423 posture maintaining portion

## Claims

1. A link mechanism comprising:
a base member extending across a pair of rail holders; and
a clip provided at one end of the base member and configured to hold a film,
wherein the clip includes:
a main body portion;
a lever portion rotatably provided on the main body portion;
a gripper rotatably provided at one end of the lever portion and configured to grip the film by being pressed against one surface of the film and sandwiching the film together with a part of the main body portion; and
a posture maintaining portion configured to maintain a posture of the gripper, and
wherein the posture maintaining portion is provided spanning the lever portion and the gripper on a film side where the link mechanism faces the film, and applies a force acting in a direction away from the one surface of the film to the gripper.

2. The link mechanism according to claim 1,
wherein the posture maintaining portion is an elastic member, and
wherein one end of the elastic member is attached to a pin provided on the lever portion and the other end of the elastic member is attached to a pin provided on the gripper.

3. The link mechanism according to claim 1, further comprising:
a shaft attached to the main body portion and inserted into a through hole formed in the lever portion; and
a bearing interposed between the shaft and the lever portion and configured to rotatably support the lever portion.

4. The link mechanism according to claim 3,
wherein the bearing has an inner ring, an outer ring, and a rolling element arranged between the inner ring and the outer ring, and
wherein a surface of the inner ring intersecting a direction in which the shaft extends comes into contact with the main body portion.

5. A link device comprising a plurality of link mechanisms capable of moving along two rails,
wherein each of the link mechanisms includes a base member extending across a pair of rail holders and a clip provided at one end of the base member and configured to hold a film,
wherein the clip includes:
a main body portion;
a lever portion rotatably provided on the main body portion;
a gripper rotatably provided at one end of the lever portion and configured to grip the film by being pressed against one surface of the film and sandwiching the film together with a part of the main body portion; and
a posture maintaining portion configured to maintain a posture of the gripper, and
wherein the posture maintaining portion is provided spanning the lever portion and the gripper on a film side where the link mechanism faces the film, and applies a force acting in a direction away from the one surface of the film to the gripper.

6. The link device according to claim 5,
wherein the posture maintaining portion is an elastic member, and
wherein one end of the elastic member is attached to a pin provided on the lever portion and the other end of the elastic member is attached to a pin provided on the gripper.

7. The link device according to claim 5, further comprising:
a shaft attached to the main body portion and inserted into a through hole formed in the lever portion; and
a bearing interposed between the shaft and the lever portion and configured to rotatably support the lever portion.

8. The link device according to claim 7,
wherein the bearing has an inner ring, an outer ring, and a rolling element arranged between the inner ring and the outer ring, and
wherein a surface of the inner ring intersecting a direction in which the shaft extends comes into contact with the main body portion.

9. A stretching machine comprising a pair of link devices configured to convey and stretch a film,
wherein each of the link devices includes a plurality of link mechanisms capable of moving along two rails,
wherein each of the link mechanisms includes a base member extending across a pair of rail holders and a clip provided at one end of the base member and configured to hold the film,
wherein the clip includes:
a main body portion;
a lever portion rotatably provided on the main body portion;
a gripper rotatably provided at one end of the lever portion and configured to grip the film by being pressed against one surface of the film and sandwiching the film together with a part of the main body portion; and
a posture maintaining portion configured to maintain a posture of the gripper, and
wherein the posture maintaining portion is provided spanning the lever portion and the gripper on a film side where the link mechanism faces the film, and applies a force acting in a direction away from the one surface of the film to the gripper.

10. The stretching machine according to claim 9,
wherein the posture maintaining portion is an elastic member, and
wherein one end of the elastic member is attached to a pin provided on the lever portion and the other end of the elastic member is attached to a pin provided on the gripper.

11. The stretching machine according to claim 9, further comprising:
a shaft attached to the main body portion and inserted into a through hole formed in the lever portion; and
a bearing interposed between the shaft and the lever portion and configured to rotatably support the lever portion.

12. The stretching machine according to claim 11,
wherein the bearing has an inner ring, an outer ring, and a rolling element arranged between the inner ring and the outer ring, and
wherein a surface of the inner ring intersecting a direction in which the shaft extends comes into contact with the main body portion.
